(19)

**Europäisches Patentamt**
**European Patent Office**
**Office européen des brevets**

(11) **EP 4 528 905 A1**

(12) **EUROPEAN PATENT APPLICATION**
published in accordance with Art. 153(4) EPC

(43) Date of publication:
**26.03.2025 Bulletin 2025/13**

(21) Application number: **22960008.5**

(22) Date of filing: **29.09.2022**

(51) International Patent Classification (IPC):
$H01M\ 50/431^{(2021.01)}$    $H01M\ 50/446^{(2021.01)}$
$H01M\ 50/451^{(2021.01)}$

(52) Cooperative Patent Classification (CPC):
H01M 50/446; H01M 10/052; H01M 10/0525;
H01M 50/403; H01M 50/409; H01M 50/414;
H01M 50/417; H01M 50/431; H01M 50/434;
H01M 50/443; H01M 50/449; H01M 50/451;
H01M 50/457; H01M 50/489; H01M 50/491;
(Cont.)

(86) International application number:
**PCT/CN2022/122476**

(87) International publication number:
**WO 2024/065367 (04.04.2024 Gazette 2024/14)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **CONTEMPORARY AMPEREX
TECHNOLOGY
(HONG KONG) LIMITED
Hong Kong (HK)**

(72) Inventors:
• **FAN, Yulei
  Ningde City, Fujian 352100 (CN)**

• **LIU, Feng
  Ningde City, Fujian 352100 (CN)**
• **ZHONG, Wei
  Ningde City, Fujian 352100 (CN)**
• **GE, Xiaoming
  Ningde City, Fujian 352100 (CN)**
• **OUYANG, Chuying
  Ningde City, Fujian 352100 (CN)**

(74) Representative: **Gong, Jinping
  CocreateIP
  Neumarkterstr. 21
  81673 München (DE)**

(54) **SEPARATOR FILM AND PREPARATION METHOD THEREFOR, SECONDARY BATTERY, AND ELECTRICAL DEVICE**

(57)    The present application provides a separator, a preparation method therefor, a secondary battery and a power consuming device. The separator comprises a first substrate layer, a mixed material layer and a second substrate layer; the mixed material layer is provided between the first substrate layer and the second substrate layer; the mixed material layer comprises an inorganic material and a dispersant; wherein the electronic conductivity σ of the separator satisfies: $1 \times 10^{-13}$ mS/cm $< \sigma < 1 \times 10^{-1}$ mS/cm. The separator of the present application can delay the occurrence of lithium dendrites or sodium dendrites puncturing the separator and the occurrence of internal short circuit in the battery, prolong the service life of the battery, increase the infiltration of the separator to the electrolyte solution and the charge and discharge rate of the battery, improve the thermal shrinkage performance of the battery, and increase the safety and the first coulombic efficiency of the battery.

*FIG. 1*

**(Cont. next page)**

EP 4 528 905 A1

(52) Cooperative Patent Classification (CPC): (Cont.)
Y02E 60/10

**Description**

**Technical Field**

The present application relates to the technical field of batteries, and in particular to a separator, a preparation method therefor, a secondary battery and a power consuming device.

**Background Art**

In recent years, with the increasing application range of batteries, batteries are widely used in energy storage power systems such as hydraulic power, thermal power, wind power and solar power stations, as well as many fields such as electric tools, electric bicycles, electric motorcycles, electric vehicles, military equipment, and aerospace. Due the great development of batteries, higher requirements have also been placed on the batteries in terms of energy density, cycling performance, safety performance, etc. At present, a separator used in a battery is easily punctured by lithium dendrites or sodium dendrites on a negative electrode plate, which causes an internal short circuit problem in the battery and seriously affects the service life of the battery; moreover, an electrolyte solution of an existing separator has a poor infiltration, resulting in low conduction rate of lithium ions or sodium ions, which affects the charge and discharge rate of the battery; in addition, the existing separator is easy to shrink seriously when being heated, which easily leads to serious safety problems.

**Summary of the Invention**

The present application has been made in view of the above problems, and an objective of the present application is to provide a separator, a preparation method therefor, a secondary battery and a power consuming device. The use of the separator of the present application can delay the occurrence of lithium dendrites or sodium dendrites puncturing the separator, thereby delaying the occurrence of internal short circuit in the battery and prolonging the service life of the battery. The use of the separator of the present application can increase the infiltration of the separator to the electrolyte solution, the transport rate of sodium ions or lithium ions, and the charge and discharge rate of the battery; the separator of the present application can further increase the thermal shrinkage performance of the battery and improve the safety of the battery; and the separator of the present application can prevent a inorganic material from reacting with a negative electrode to consume lithium or sodium metal, thereby increasing the first coulombic efficiency of the battery.

In order to achieve the above object, in a first aspect, the present application provides a separator comprising: a first substrate layer, a mixed material layer and a second substrate layer; the mixed material layer is provided between the first substrate layer and the second substrate layer; the mixed material layer comprises an inorganic material and a dispersant; wherein,

the electronic conductivity $\sigma$ of the separator satisfies: $1 \times 10^{-13}$ mS/cm $< \sigma < 1 \times 10^{-1}$ mS/cm.

Under the action of an electric field, holes and electrons in the inorganic material move in a directional manner, making the inorganic material have electronic conductivity. Inorganic materials have different crystal forms in structure, and different crystal forms have different effects on electronic conductivity, which leads to the same type of inorganic materials showing a wide range of electronic conductivity distribution due to structural differences; when the separator comprises an inorganic material, the electronic conductivity of the separator also exhibits a large variation range.

Therefore, in the present application, a separator that satisfies a certain electronic conductivity is used to make the inorganic material in the mixed material layer react with the lithium dendrites or sodium dendrites on the negative electrode plate, which delays the occurrence of lithium dendrites or sodium dendrites puncturing the separator and the occurrence of internal short circuit in the battery, prolongs the service life of the battery, and can reduce the deposition of lithium ions on the surface of the separator, thereby reducing the occurrence of self-discharge and internal short circuit inside the battery. In the present application, the mixed material layer increases the infiltration of the separator to the electrolyte solution, the transport rate of sodium ions or lithium ions, and the charge and discharge rate of the battery; in the present application, the use of the mixed material layer increase the thermal shrinkage performance of the battery, and improves the safety of the battery; moreover, when the negative electrode is lithium metal or sodium metal, the first substrate layer or the second substrate layer in the present application isolates the mixed material layer and the negative electrode, so as to prevent the mixed material layer from reacting with the negative electrode to consume lithium or sodium metal in advance, thereby ensuring the first coulombic efficiency of the battery.

In any embodiment, the inorganic material is selected from one or more of (1) - (3) below:

(1) elemental silicon;
(2) oxides, nitrides and fluorides of one or more elements selected from silicon, aluminum, iron, titanium, cobalt, nickel, manganese, tin, zinc, barium and copper; and

(3) phosphates of one or more elements selected from aluminum, iron, titanium, cobalt, nickel, manganese, tin, zinc, barium and copper.

In any embodiment, the inorganic material is selected from one or more of silicon dioxide, silicon monoxide, silicon, zinc oxide, tin oxide, copper oxide, iron phosphate, barium titanate, cobalt oxide, manganese oxide, iron oxide, copper nitride and lithium titanium aluminum phosphate.

The mixed material layer using the above inorganic material can react with lithium dendrites or sodium dendrites, which further delays the occurrence of lithium dendrites or sodium dendrites puncturing the separator and the occurrence time of internal short circuit in the battery, and prolongs the service life of the battery; the mixed material layer using the above inorganic material further increases the infiltration of the separator to the electrolyte solution, improves the transport rate of sodium ions or lithium ions, and increases the charge and discharge rate of the battery; and the mixed material layer comprising the above inorganic material further increases the thermal shrinkage performance of the battery and improves the safety of the battery.

In any embodiment, the mass content of the inorganic material is 75% - 99.7%, and the mass content of the dispersant is 0.1% - 15%, optionally 0.1% - 5%, based on the total mass of the mixed material layer.

The above mass content is beneficial for promoting the reaction between the mixed material layer and lithium dendrites or sodium dendrites, which further delays the occurrence of lithium dendrites or sodium dendrites puncturing the separator and the occurrence of the resulting internal short circuit in the battery, prolongs the service life of the battery while keeping the inorganic materials evenly dispersed in the mixed material layer, so as to ensure the normal function of the mixed material layer.

In any embodiment, the ratio of the particle size $D_v50$ of the inorganic material to the average pore size of the first substrate layer is 1 : 1 - 243 : 1; and/or,

the ratio of the particle size $D_v50$ of the inorganic material to the average pore size of the second substrate layer is 1 : 1 - 243 : 1.

The above proportion range is beneficial to the contact of lithium dendrites or sodium dendrites with inorganic material particles after puncturing the substrate layer, and also to the better reaction kinetics of the mixed material layer with lithium dendrites or sodium dendrites; moreover, the above ratio range reduces the blockage of the pores on the substrate layer by the inorganic material particles.

In any embodiment, the dispersant is selected from one or more of sodium polyacrylate, ammonium polyacrylate, sodium hexafluorophosphate, sodium carboxymethyl cellulose, hydrolyzed polymaleic anhydride, an acrylic block polymer, a polyester block polymer, a polyethylene glycol polyol, polyvinyl alcohol and a polyethyleneimine derivative.

Therefore, it is beneficial to the uniform distribution of the inorganic material in the mixed material layer, helps the mixed material layer to react normally with lithium dendrites or sodium dendrites, delays lithium dendrites or sodium dendrites from puncturing the separator and the occurrence of battery short circuit caused by lithium or sodium precipitation, and prolongs the service life of the battery.

In any embodiment, the thickness of the mixed material layer is 0.5 - 10 $\mu$m;

optionally, the thickness of the separator is 11 - 24 $\mu$m.

By means of the above thickness of the mixed material layer and the thickness of the separator, on the one hand, it can ensure that the mixed material layer can react with lithium dendrites or sodium dendrites on the negative electrode plate, so as to delay the occurrence of lithium dendrites or sodium dendrites puncturing the separator and the occurrence of battery short circuit caused by lithium or sodium precipitation, on the other hand, the volume occupied by the separator is reduced, which increases the energy density of the battery cell.

In any embodiment, the mixed material layer further comprises a polymer selected from one or more of a styrene-butadiene rubber (SBR), a water-based acrylic resin, polyvinylidene fluoride (PVDF), polytetrafluoroethylene (PTFE), a ethylene-vinyl acetate (EVA) copolymer, polyacrylic acid (PAA), carboxymethyl cellulose (CMC), polyvinyl alcohol (PVA), and polyvinyl butyral (PVB);

optionally, the mass content of the polymer is 0.1% - 20%, based on the total mass of the mixed material layer.

The polymer is helpful to the mutual binding of the components in the mixed material layer.

In any embodiment, a protective layer is further provided on the surface of the first substrate layer away from the mixed material layer and/or on the surface of the second substrate layer away from the mixed material layer; optionally, the protective layer contains one or two selected from alumina and boehmite. Therefore, the infiltration of the separator to the electrolyte solution and the high-voltage resistance performance of the separator can be further increased.

In a second aspect, the present application further provides a method for preparing a separator, comprising the steps of:

coating a slurry comprising an inorganic material, a dispersant and optionally a polymer on a first substrate layer to obtain a first substrate layer provided with a mixed material layer; and

compounding a second substrate layer on the surface of the mixed material layer far away from the first substrate layer to obtain a separator;

wherein the separator comprises the first substrate layer, the mixed material layer and the second substrate layer; the mixed material layer is provided between the first substrate layer and the second substrate layer; the mixed material layer comprises an inorganic material, a dispersant and optionally a polymer; the electronic conductivity $\sigma$ of the separator satisfies: $1 \times 10^{-13}$ mS/cm $< \sigma < 1 \times 10^{-1}$ mS/cm; the inorganic material, dispersant and polymer are as defined in the first aspect of the present application.

Therefore, in the present application, by reacting the mixed material layer with lithium dendrites or sodium dendrites on the negative electrode plate, the occurrence of lithium dendrites or sodium dendrites puncturing the separator and the occurrence of internal short circuit in the battery are delayed, the service life of the battery is prolonged, and the deposition of lithium ions on the surface of the separator can be reduced, thereby reducing the occurrence of self-discharge and internal short circuit inside the battery. In the present application, the mixed material layer increases the infiltration of the separator to the electrolyte solution, the transport rate of sodium ions or lithium ions, and the charge and discharge rate of the battery; in the present application, the use of the mixed material layer increase the thermal shrinkage performance of the battery, and improves the safety of the battery; moreover, when the negative electrode is lithium metal or sodium metal, the first substrate layer or the second substrate layer in the present application isolates the mixed material layer and the negative electrode, so as to prevent the mixed material layer from reacting with the negative electrode to consume lithium or sodium metal in advance, thereby ensuring the first coulombic efficiency of the battery.

In a third aspect, the present application provides a secondary battery, comprising a separator of the first aspect of the present application or a separator prepared by a method according to the second aspect of the present application.

In any embodiment, in the battery, a positive electrode active material comprises one or more selected from lithium iron phosphate, a nickel cobalt manganese ternary material, lithium manganate, lithium cobaltate and lithium nickelate; and/or, a negative electrode active materialcomprisesone or more selected from graphite, a silicon carboncompound,a silicon oxidecompound and lithium metal.

A fourth aspect of the present application provides a power consuming device, comprising the secondary battery of the third aspect of the present application.


**Brief Description of the Drawings**

Fig. 1 shows a schematic diagram of a secondary battery according to an embodiment of the present application.
Fig. 2 shows an exploded view of the secondary battery according to an embodiment of the present application as shown in Fig. 1.
Fig. 3 shows a schematic diagram of a battery module according to an embodiment of the present application.
Fig. 4 shows a schematic diagram of a battery pack according to an embodiment of the present application.
Fig. 5 shows an exploded view of the battery pack according to an embodiment of the present application as shown in Fig. 4.
Fig. 6 shows a schematic diagram of a power consuming device using a secondary battery according to an embodiment of the present application as a power source.


List of reference numerals:

1 - battery pack; 2 - upper box body; 3 - lower box body; 4 - battery module; 5 - secondary battery; 51 - housing; 52 - electrode assembly; 53 - top cover assembly.


**Detailed Description of Embodiments**

Hereafter, embodiments of the separator and the preparation method therefor, the secondary battery, the battery module, the battery pack, and the power consuming device of the present application are specifically disclosed in the detailed description with reference to the accompanying drawings as appropriate. However, unnecessary detailed illustrations may be omitted in some instances. For example, there are situations where detailed description of well known items and repeated description of actually identical structures are omitted. This is to prevent the following description from being unnecessarily verbose, and facilitates understanding by those skilled in the art. Moreover, the accompanying drawings and the descriptions below are provided for enabling those skilled in the art to fully understand the present application, rather than limiting the subject matter disclosed in the claims.

The "ranges" disclosed in the present application are defined in the form of lower and upper limits. A given range is defined by selecting a lower limit and an upper limit, and the selected lower and upper limits defining the boundaries of the particular range. Ranges defined in this manner may be inclusive or exclusive, and may be arbitrarily combined, that is, any lower limit may be combined with any upper limit to form a range. For example, if the ranges 60-120 and 80-110 are listed for a particular parameter, it should be understood that the ranges 60-110 and 80-120 are also contemplated. Additionally, if minimum range values 1 and 2 are listed and maximum range values 3, 4, and 5 are listed, the following ranges are all contemplated: 1-3, 1-4, 1-5, 2-3, 2-4, and 2-5. In the present application, unless stated otherwise, the numerical range "a-b" denotes an abbreviated representation of any combination of real numbers between a and b, where both a and b are real numbers. For example, the numerical range "0-5" means that all the real numbers between "0-5" have been listed herein, and "0-5" is just an abbreviated representation of combinations of these numerical values. In addition, when a parameter is expressed as an integer $\geq 2$, it is equivalent to disclosing that the parameter is, for example, an integer of 2, 3, 4, 5, 6, 7, 8, 9, 10, 11, 12, etc.

All the embodiments and optional embodiments of the present application can be combined with one another to form new technical solutions, unless otherwise stated.

All technical features and optional technical features of the present application can be combined with one another to form a new technical solution, unless otherwise stated.

Unless otherwise stated, all the steps of the present application may be performed sequentially or randomly, preferably sequentially. For example, the method including steps (a) and (b) indicates that the method may comprise steps (a) and (b) carried out sequentially, and may also comprise steps (b) and (a) carried out sequentially. For example, reference to "the method may further comprise step (c)" indicates that step (c) may be added to the method in any order, e.g., the method may comprise steps (a), (b) and (c), steps (a), (c) and (b), or steps (c), (a) and (b).

The terms "comprise" and "include" mentioned in the present application are open-ended or may also be closed-ended, unless otherwise stated. For example, "comprise" and "include" may mean that other components not listed may further be comprised or included, or only the listed components may be comprised or included.

In the present application, the term "or" is inclusive unless otherwise specified. For example, the phrase "A or B" means "A, B, or both A and B". More specifically, the condition "A or B" is satisfied by any one of the following: A is true (or present) and B is false (or not present); A is false (or not present) and B is true (or present); or both A and B are true (or present).

[Secondary battery]

A secondary battery, also known as a rechargeable battery or an accumulator, refers to a battery of which an active material can be activated by means of charging for reuse after the battery is discharged.

Generally, the secondary battery comprises a positive electrode plate, a negative electrode plate, a separator and an electrolyte solution. During a charge and discharge process of the battery, active ions (e.g., lithium ions, sodium ions) are intercalated and de-intercalated back and forth between the positive electrode plate and the negative electrode plate. The separator is arranged between the positive electrode plate and the negative electrode plate, and mainly play a role of preventing the positive and negative electrodes from short-circuiting and enabling active ions to pass through. The electrolyte solution is provided between the positive electrode plate and the negative electrode plate and mainly functions for active ion conduction.

[Separator]

An embodiment of the present application provides a separator, comprising: a first substrate layer, a mixed material layer and a second substrate layer; the mixed material layer is provided between the first substrate layer and the second substrate layer; the mixed material layer comprises an inorganic material and a dispersant; wherein, the electronic conductivity $\sigma$ of the separator satisfies: $1 \times 10^{-13}$ mS/cm $< \sigma < 1 \times 10^{-1}$ mS/cm; optionally, $1 \times 10^{-11}$ mS/cm $< \sigma < 1 \times 10^{-3}$ mS/cm, more optionally, $1.5 \times 10^{-11}$ mS/cm $< \sigma < 9 \times 10^{-4}$ mS/cm, for example $10^{-10}$ mS/cm, $10^{-9}$ mS/cm, $10^{-8}$ mS/cm, $10^{-6}$ mS/cm, $10^{-5}$ mS/cm, $10^{-4}$ mS/cm and ranges consisting of any two of the above values as endpoints.

Under the action of an electric field, holes and electrons in the inorganic material move in a directional manner, making the inorganic material have electronic conductivity. Inorganic materials have different crystal forms in structure, and different crystal forms have different effects on electronic conductivity, which leads to the same type of inorganic materials showing a wide range of electronic conductivity distribution due to structural differences; when the separator comprises an inorganic material, the electronic conductivity of the separator also exhibits a large variation range.

Although the mechanism is not yet clear, the applicant has unexpectedly discovered that firstly, the ends of the lithium dendrites or sodium dendrites on the negative electrode plate puncture through the first substrate layer or the second substrate layer and then come into contact the mixed material layer, and when the electronic conductivity $\sigma$ of the separator is greater than $1 \times 10^{-13}$ mS/cm, it is beneficial for the inorganic material in the mixed material layer to react with lithium dendrites or sodium dendrites, thereby delaying the occurrence time of lithium dendrites or sodium dendrites puncturing the separator and the occurrence of internal short circuit in the battery, and prolonging the service life of the battery; moreover, when the electronic conductivity σ of the separator is less than $1 \times 10^{-1}$ mS/cm, the deposition of lithium ions on the surface of the separator can be reduced, thereby reducing the occurrence of self-discharge and internal short circuit inside the battery; secondly, the mixed material layer of the present application has a strong affinity with the electrolyte solution, which increases the infiltration of the separator to the electrolyte solution and the transport rate of sodium ions or lithium ions, thereby increasing the charge and discharge rate of the battery; thirdly, the mixed material layer of the present application is less prone to shrink when being heated, which increases the thermal shrinkage performance of the battery and improves the safety of the battery; moreover, when the negative electrode is lithium metal or sodium metal, the first substrate layer or the second substrate layer in the present application isolates the mixed material layer and the negative electrode, so as to prevent the mixed material layer from reacting with the negative electrode to consume lithium or sodium metal in advance, thereby ensuring the first coulombic efficiency of the battery.

In some embodiments, the electronic conductivity σ of the separator can be determined by a conventional method in the technical field, for example, it can be determined by the following specific method:

lithium iron phosphate is used as the positive electrode, graphite is used as the negative electrode plate, and the interlayer is the separator to be tested, and the impedance is tested by using a hot-pressing resistance meter under a certain pressure and voltage. The area of the separator is tested as S, and the resistance value of the separator is tested as R; the electronic conductivity σ of the separator is calculated according to the following formula;

$$R = S / \ (\sigma \times \ell)$$

in which, $\ell = H \times (1 - \text{porosity})$, H is the initial thickness of the separator, and $\ell$ is the corresponding thickness of the separator after the pores are eliminated under the above pressure.

The test method of the above porosity is as follows:

the thickness and area of the separator is measured to calculate the apparent volume V of the separator, the weight M of the separator is measured, ρ indicates the theoretical density of the substrate in the separator, and the porosity P of the separator is calculated according to the following formula.

$$P = \left(1 - \frac{M}{V \times \rho}\right) \times 100\%$$

In some embodiments, the inorganic material is selected from one or more of (1) - (3) below:

(1) elemental silicon;
(2) oxides, nitrides and fluorides of one or more elements selected from silicon, aluminum, iron, titanium, cobalt, nickel, manganese, tin, zinc, barium and copper; and
(3) phosphates of one or more elements selected from aluminum, iron, titanium, cobalt, nickel, manganese, tin, zinc, barium and copper.

In some embodiments, the inorganic material is selected from one or more of silicon dioxide, silicon monoxide, silicon, zinc oxide, tin oxide, copper oxide, iron phosphate, barium titanate, cobalt oxide, manganese oxide, iron oxide, copper nitride and lithium titanium aluminum phosphate.

The mixed material layer using the above inorganic material can react with lithium dendrites or sodium dendrites, which further delays the occurrence of lithium dendrites or sodium dendrites puncturing the separator and the occurrence time of internal short circuit in the battery, and prolongs the service life of the battery; the mixed material layer using the above inorganic material further increases the infiltration of the separator to the electrolyte solution, improves the transport rate of sodium ions or lithium ions, and increases the charge and discharge rate of the battery; and the mixed material layer comprising the above inorganic material further increases the thermal shrinkage performance of the battery and improves the safety of the battery.

In some embodiments, based on the total mass of the mixed material layer, the mass content of the inorganic material is 75% - 99.7%, for example, 98.5%, 94%, 90%, 85%, 80% and 76%, and the mass content of the dispersant is 0.1% - 15%, optionally 0.1% - 5%, for example, 0.5%, 1%, 4%, 5% and ranges consisting of any two of the above values as endpoints.

The above mass content is beneficial for promoting the reaction between the mixed material layer and lithium dendrites or sodium dendrites, which further delays the occurrence of lithium dendrites or sodium dendrites puncturing the separator and the occurrence of the resulting internal short circuit in the battery, prolongs the service life of the battery while keeping the inorganic materials evenly dispersed in the mixed material layer, so as to ensure the normal function of the mixed material layer.

In some embodiments, the ratio of the particle size $D_v50$ of the inorganic material to the average pore size of the first substrate layer is 1 : 1 - 243 : 1, for example, 4 : 1, 5 : 1, 8 : 1, 10 : 1, 11 : 1, 12 : 1, 14 : 1, 15 : 1, 16 : 1, 19 : 1, 20 : 1, 27 : 1, 30 : 1, 40 : 1, 50 : 1, 60 : 1, 70 : 1, 80 : 1, 100 : 1, 120 : 1, 140 : 1, 160 : 1, 180 : 1, 200 : 1, 220 : 1 and ranges consisting of any two of the above values as endpoints; and/or,

the ratio of the particle size $D_v50$ of the inorganic material to the average pore size of the second substrate layer is 1 : 1 - 243 : 1, for example, 4 : 1, 5 : 1, 8 : 1, 10 : 1, 11 : 1, 12 : 1, 14 : 1, 15 : 1, 16 : 1, 19 : 1, 20 : 1, 27 : 1, 30 : 1, 40 : 1, 50 : 1, 60 : 1, 70 : 1, 80 : 1, 100 : 1, 120 : 1, 140 : 1, 160 : 1, 180 : 1, 200 : 1, 220 : 1 and ranges consisting of any two of the above values as endpoints.

The above proportion range is beneficial to the contact of lithium dendrites or sodium dendrites with inorganic material particles after puncturing the substrate layer, and also to the better reaction kinetics of the mixed material layer with lithium dendrites or sodium dendrites; moreover, the above ratio range reduces the blockage of the pores on the substrate layer by the inorganic material particles.

In some embodiments, the dispersant is selected from one or more of sodium polyacrylate, ammonium polyacrylate, sodium hexafluorophosphate, sodium carboxymethyl cellulose, hydrolyzed polymaleic anhydride, an acrylic block polymer, a polyester block polymer, a polyethylene glycol polyol, polyvinyl alcohol and a polyethyleneimine derivative.

Therefore, it is beneficial to the uniform distribution of the inorganic material in the mixed material layer, helps the mixed material layer to react normally with lithium dendrites or sodium dendrites, delays lithium dendrites or sodium dendrites from puncturing the separator and the occurrence of battery short circuit caused by lithium or sodium precipitation, and prolongs the service life of the battery. Some of the above dispersants belong to polymers, which meet the requirements of conventional polymer-based dispersants in the technical field on molecular weight and distribution.

In some embodiments, the thickness of the mixed material layer is 0.5 - 10 $\mu$m, for example, 3 $\mu$m; optionally, the thickness of the separator is 11 - 24 $\mu$m, for example, 14 $\mu$m, 15 $\mu$m, 17 $\mu$m, 19 $\mu$m and ranges consisting of any two of the above values as endpoints.

By means of the above thickness of the mixed material layer and the thickness of the separator, on the one hand, it can ensure that the mixed material layer can react with lithium dendrites or sodium dendrites on the negative electrode plate, so as to delay the occurrence of lithium dendrites or sodium dendrites puncturing the separator and the occurrence of battery short circuit caused by lithium or sodium precipitation, on the other hand, the volume occupied by the separator is reduced, which increases the energy density of the battery cell.

In some embodiments, the mixed material layer further comprises a polymer selected from one or more of a styrene-butadiene rubber (SBR), a water-based acrylic resin, polyvinylidene fluoride (PVDF), polytetrafluoroethylene (PTFE), an ethylene-vinyl acetate (EVA) copolymer, polyacrylic acid (PAA), carboxymethyl cellulose (CMC), polyvinyl alcohol (PVA), and polyvinyl butyral (PVB);

optionally, based on the total mass of the mixed material layer, the mass content of the polymer is 0.1% - 20%, for example, 0.2%, 1%, 1.4%, 10% and ranges consisting of any two of the above values as endpoints.

The polymer is helpful to the mutual binding of the components in the mixed material layer. The above polymer meets the conventional requirements of the technical field on the molecular weight and distribution of the polymer that plays a role in binding, and optionally, the weight-average molecular weight of the polymer is 300,000-10,000,000, for example 500,000.

In some embodiments, a protective layer is further provided on the surface of the first substrate layer away from the mixed material layer and/or on the surface of the second substrate layer away from the mixed material layer; optionally, the protective layer contains one or two selected from alumina and boehmite. Therefore, the infiltration of the separator to the electrolyte solution and the high-voltage resistance performance of the separator can be further increased.

In some embodiments, the first and second substrate layers comprise substrates, and the substrates in the first and second substrate layers are independently selected from one or more of polyethylene, polypropylene, polyvinylidene fluoride, aramid fiber, polyethylene terephthalate, polytetrafluoroethylene, polyacrylonitrile, polyimide, polyamide, polyester or natural fibers.

The use of the above substrates is beneficial to isolating the mixed material layer and the negative electrode, so as to prevent the mixed material layer from reacting with the negative electrode to consume lithium or sodium metal in advance, thereby increasing the first coulombic efficiency of the battery.

[Method for preparing separator]

An embodiment of the present application provides a method for preparing a separator, comprising the steps of:

coating a slurry comprising an inorganic material, a dispersant and optionally a polymer on a first substrate layer to obtain a first substrate layer provided with a mixed material layer; and
compounding a second substrate layer on the surface of the mixed material layer far away from the first substrate layer to obtain a separator;

wherein the separator comprises the first substrate layer, the mixed material layer and the second substrate layer; the mixed material layer is provided between the first substrate layer and the second substrate layer; the mixed material layer comprises an inorganic material, a dispersant and optionally a polymer; the electronic conductivity $\sigma$ of the separator satisfies: $1 \times 10^{-13}$ mS/cm $< \sigma < 1 \times 10^{-1}$ mS/cm; optionally, $1 \times 10^{-11}$ mS/cm $< \sigma < 1 \times 10^{-3}$ mS/cm, more optionally, $1.5 \times 10^{-11}$ mS/cm $< \sigma < 9 \times 10^{-4}$ mS/cm, for example $10^{-10}$ mS/cm, $10^{-9}$ mS/cm, $10^{-8}$ mS/cm, $10^{-6}$ mS/cm, $10^{-5}$ mS/cm, $10^{-4}$ mS/cm and ranges consisting of any two of the above values as endpoints; the inorganic material, dispersant and polymer are as defined as in [separator].

Therefore, the ends of the lithium dendrites or sodium dendrites on the negative electrode plate puncture through the first substrate layer or the second substrate layer and then come into contact the mixed material layer, and when the electronic conductivity $\sigma$ of the separator is greater than $1 \times 10^{-13}$ mS/cm, it is beneficial for the mixed material layer to react with lithium dendrites or sodium dendrites, thereby delaying the occurrence time of lithium dendrites or sodium dendrites puncturing the separator and the occurrence of internal short circuit in the battery, and prolonging the service life of the battery; moreover, when the electronic conductivity $\sigma$ of the separator is less than $1 \times 10^{-1}$ mS/cm, the deposition of lithium ions on the surface of the separator can be reduced, thereby reducing the occurrence of self-discharge and internal short circuit inside the battery. In the present application, the mixed material layer increases the infiltration of the separator to the electrolyte solution, the transport rate of sodium ions or lithium ions, and the charge and discharge rate of the battery; the use of the mixed material layer increases the thermal shrinkage performance of the battery and improves the safety of the battery; moreover, when the negative electrode is lithium metal or sodium metal, the first substrate layer or the second substrate layer in the present application isolates the mixed material layer and the negative electrode, so as to prevent the mixed material layer from reacting with the negative electrode to consume lithium or sodium metal in advance, thereby ensuring the first coulombic efficiency of the battery.

[Positive electrode plate]

The positive electrode plate generally comprises a positive electrode current collector and a positive electrode film layer arranged on at least one surface of the positive electrode current collector, wherein the positive electrode film layer comprises a positive electrode active material.

As an example, the positive electrode current collector has two surfaces opposite in its own thickness direction, and the positive electrode film layer is provided on either or both of opposite surfaces of the positive electrode current collector.

In some embodiments, the positive electrode current collector may be a metal foil or a composite current collector. For example, as a metal foil, an aluminum foil can be used. The composite current collector may comprise a polymer material base layer and a metal layer formed on at least one surface of the polymer material base layer. The composite current collector can be formed by forming a metal material (aluminum, an aluminum alloy, nickel, a nickel alloy, titanium, a titanium alloy, silver and a silver alloy, etc.) on a polymer material substrate (such as polypropylene (PP), polyethylene terephthalate (PET), polybutylene terephthalate (PBT), polystyrene (PS), polyethylene (PE), etc.).

In some embodiments, the positive electrode active material can be a positive electrode active material known in the art for batteries. As an example, the positive electrode active material may comprise at least one of the following materials: lithium-containing phosphates of an olivine structure, lithium transition metal oxides, and their respective modified compounds. However, the present application is not limited to these materials, and other conventional materials that can be used as positive electrode active materials for batteries may also be used. These positive electrode active materials may be used alone or in combination of two or more. Herein, examples of lithium transition metal oxides may include, but are not limited to, at least one of lithium cobalt oxide (e.g. $LiCoO_2$), lithium nickel oxide (e.g. $LiNiO_2$), lithium manganese oxide (e.g. $LiMnO_2$, $LiMn_2O_4$), lithium nickel cobalt oxide, lithium manganese cobalt oxide, lithium nickel manganese oxide, lithium nickel cobalt manganese oxide (e.g. $LiNi_{1/3}Co_{1/3}Mn_{1/3}O_2$ (also referred to as $NCM_{333}$), $LiNi_{0.5}Co_{0.2}Mn_{0.3}O_2$ (also referred to as $NCM_{523}$), $LiNi_{0.5}Co_{0.25}Mn_{0.25}O_2$ (also referred to as $NCM_{211}$), $LiNi_{0.6}Co_{0.2}Mn_{0.2}O_2$ (also referred to as $NCM_{622}$), $LiNi_{0.8}Co_{0.1}Mn_{0.1}O_2$ (also referred to as $NCM_{811}$)), lithium nickel cobalt aluminum oxide (e.g. $LiNi_{0.85}Co_{0.15}Al_{0.05}O_2$), and modified compounds thereof, etc. Examples of lithium-containing phosphates of olivine structure may include, but are not limited to, at least one of lithium iron phosphate (e.g. $LiFePO_4$ (also referred to as LFP)), lithium iron phosphate and carbon composites, lithium manganese phosphate (e.g. $LiMnPO_4$), lithium manganese phosphate and carbon composites, lithium iron manganese phosphate, and lithium iron manganese phosphate and carbon composites.

In some embodiments, the positive electrode film layer further optionally comprises a binder. As an example, the binder may comprise at least one of polyvinylidene fluoride (PVDF), polytetrafluoroethylene (PTFE), a vinylidene fluoride-tetrafluoroethylene-propylene terpolymer, a vinylidene fluoride-hexafluoropropylene-tetrafluoroethylene terpolymer, a tetrafluoroethylene-hexafluoropropylene copolymer, and a fluorine-containing acrylate resin.

In some embodiments, the positive electrode film layer also optionally comprises a conductive agent. As an example, the conductive agent may comprise at least one of superconducting carbon, acetylene black, carbon black, Ketjen black, carbon dots, carbon nanotubes, graphene, and carbon nanofibers.

In some embodiments, the positive electrode plate can be prepared as follows: dispersing the above-mentioned components for preparing the positive electrode plate, such as a positive electrode active material, a conductive agent, a binder and any other components, in a solvent (e.g., N-methyl pyrrolidone) to form a positive electrode slurry; and coating the positive electrode current collector with the positive electrode slurry, followed by the procedures such as drying and cold pressing, so as to obtain the positive electrode plate.

[Negative electrode plate]

The negative electrode plate comprises a negative electrode current collector and a negative electrode film layer provided on at least one surface of the negative electrode current collector, wherein the negative electrode film layer comprises a negative electrode active material.

As an example, the negative electrode current collector has two surfaces opposite in its own thickness direction, and the negative electrode film layer is provided on either or both of the two opposite surfaces of the negative electrode current collector.

In some embodiments, the negative electrode current collector may be a metal foil or a composite current collector. For example, as a metal foil, a copper foil can be used. The composite current collector may comprise a polymer material base layer and a metal layer formed on at least one surface of the polymer material substrate. The composite current collector can be formed by forming a metal material (copper, a copper alloy, nickel, a nickel alloy, titanium, a titanium alloy, silver and a silver alloy, etc.) on a polymer material substrate (e.g., polypropylene (PP), polyethylene terephthalate (PET), polybutylene terephthalate (PBT), polystyrene (PS), polyethylene (PE), etc.).

In some embodiments, the negative electrode active material can be a negative electrode active material known in the art for batteries. As an example, the negative electrode active material may comprise at least one of the following materials: artificial graphite, natural graphite, soft carbon, hard carbon, a silicon-based material, a tin-based material and lithium titanate, etc. The silicon-based material may be selected from at least one of elemental silicon, a silicon oxide, a silicon carbon composite, a silicon nitrogen composite, and a silicon alloy. The tin-based material may be selected from at least one of elemental tin, a tin oxide, and a tin alloy. However, the present application is not limited to these materials, and other conventional materials that can be used as negative electrode active materials for batteries can also be used. These negative electrode active materials may be used alone or as a combination of two or more.

In some embodiments, the negative electrode film layer may optionally comprise a binder. As an example, the binder may be selected from at least one of a styrene butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA), and carboxymethyl chitosan (CMCS).

In some embodiments, the negative electrode film layer may optionally comprise a conductive agent. As an example, the conductive agent may be selected from at least one of superconductive carbon, acetylene black, carbon black, Ketjen black, carbon dots, carbon nanotubes, graphene, and carbon nanofibers.

In some embodiments, the negative electrode film layer may optionally comprise other auxiliary agents, such as thickener (e.g. sodium carboxymethyl cellulose (CMC-Na)), etc.

In some embodiments, the negative electrode plate can be prepared as follows: dispersing the above-mentioned components for preparing the negative electrode plate, such as negative electrode active material, conductive agent, binder and any other components, in a solvent (e.g. deionized water) to form a negative electrode slurry; and coating a negative electrode current collector with the negative electrode slurry, followed by procedures such as drying and cold pressing, so as to obtain the negative electrode plate.

[Electrolyte]

The electrolyte functions to conduct ions between the positive electrode plate and the negative electrode plate. The type of the electrolyte is not specifically limited in the present application, and can be selected according to actual requirements. For example, the electrolyte may be in a liquid state, a gel state or an all-solid state.

In some embodiments, the electrolyte is liquid and comprises an electrolyte salt and a solvent.

In some embodiments, the electrolyte salt may be selected from at least one of lithium hexafluorophosphate, lithium tetrafluoroborate, lithium perchlorate, lithium hexafluoroarsenate, lithium bisfluorosulfonimide, lithium bistrifluoromethanesulfonimide, lithium trifluoromethanesulfonate, lithium difluorophosphate, lithium difluorooxalate borate, lithium dioxalate borate, lithium difluorodioxalate phosphate and lithium tetrafluorooxalate phosphate.

In some embodiments, the solvent may be selected from at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, ethyl methyl sulfone, and diethyl sulfone.

In some embodiments, an electrolyte solution further optionally comprises an additive. As an example, the additive may comprise a negative electrode film-forming additive and a positive electrode film-forming additive, and may further comprise an additive that may improve some properties of the battery, such as an additive that improves the overcharge property of the battery, or an additive that improves the high-temperature or low-temperature property of the battery.

In some embodiments, an electrode assembly may be formed by a positive electrode plate, a negative electrode plate and a separator by a winding process or a stacking process.

In some embodiments, the secondary battery may comprise an outer package. The outer package may be used to encapsulate the above-mentioned electrode assembly and electrolyte.

In some embodiments, the outer package of the secondary battery can be a hard shell, for example, a hard plastic shell, an aluminum shell, a steel shell, etc. The outer package of the secondary battery may also be a soft bag, such as a pouch-type soft bag. The material of the soft bag may be plastics, and the examples of plastics may comprise polypropylene, polybutylene terephthalate, polybutylene succinate, etc.

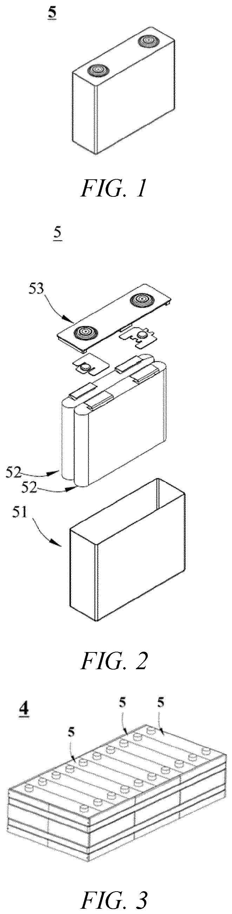

The shape of the secondary battery is not particularly limited in the present application and may be cylindrical, square or of any other shape. For example, Fig. 1 shows a secondary battery 5 with a square structure as an example.

In some embodiments, with reference to Fig. 2, the outer package may include a housing 51 and a cover plate 53. Herein, the housing 51 may comprise a bottom plate and side plates connected to the bottom plate, and the bottom plate and the side plates enclose to form an accommodating cavity. The housing 51 has an opening in communication with the accommodating cavity, and the cover plate 53 can cover the opening to close the accommodating cavity. The positive electrode plate, the negative electrode plate, and the separator may be subjected to a winding process or a laminating process to form an electrode assembly 52. The electrode assembly 52 is packaged in the accommodating cavity. The electrolyte solution infiltrates the electrode assembly 52. The number of the electrode assemblies 52 contained in the secondary battery 5 may be one or more, and can be selected by those skilled in the art according to actual requirements.

The secondary battery comprises a battery cell form, a battery module form and a battery pack form. In some embodiments, the battery cell can be assembled into a battery module, and the number of the battery cells contained in the battery module may be one or more, and the specific number can be selected by those skilled in the art according to the application and capacity of the battery module.

Fig. 3 shows a battery module 4 as an example. Referring to Fig. 3, in the battery module 4, a plurality of battery cells 5 may be arranged sequentially along a length direction of the battery module 4. Apparently, the secondary batteries may also be arranged in any other manner. Furthermore, the plurality of battery cells 5 may be fixed by fasteners.

Optionally, the battery module 4 may further comprise a housing with an accommodating space, and the plurality of battery cells 5 are accommodated in the accommodating space.

In some embodiments, the above battery module may also be assembled into a battery pack, the number of the battery modules contained in the battery pack may be one or more, and the specific number can be selected by those skilled in the art according to the application and capacity of the battery pack.

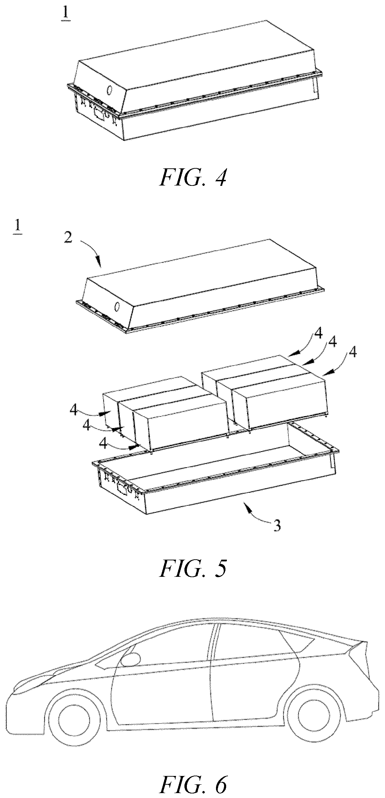

Fig. 4 and Fig. 5 show a battery pack 1 as an example. Referring to Fig. 4 and Fig. 5, the battery pack 1 may comprise a battery box and a plurality of battery modules 4 provided in the battery box. The battery box comprises an upper box body 2 and a lower box body 3, wherein the upper box body 2 may cover the lower box body 3 to form a closed space for accommodating the battery modules 4. A plurality of battery modules 4 may be arranged in the battery box in any manner.

In addition, the present application further provides a power consuming device, including the secondary battery provided in the present application. The secondary battery can be used as a power supply of a power consuming device, and can also be used as an energy storage unit of the power consuming device. The power consuming device may include a mobile device (e.g., a mobile phone, a laptop computer, etc.), an electric vehicle (e.g., a pure electric vehicle, a hybrid electric vehicle, a plug-in hybrid electric vehicle, an electric bicycle, an electric scooter, an electric golf cart, an electric truck), an electric train, ship, and satellite, an energy storage system, and the like, but is not limited thereto.

As a power consuming device, a secondary battery can be selected according to the usage requirements thereof.

Fig. 6 shows a power consuming device as an example. The power consuming device may be a pure electric vehicle, a hybrid electric vehicle, a plug-in hybrid electric vehicle, etc. In order to meet the requirements of the power consuming device for a high power and a high energy density of a secondary battery, a battery pack or a battery module may be used.

[Examples]

Hereinafter the examples of the present application will be explained. The examples described below are exemplary and are merely for explaining the present application, and should not be construed as limiting the present application. The examples in which techniques or conditions are not specified are based on the techniques or conditions described in documents in the art or according to the product introduction. The reagents or instruments used therein for which manufacturers are not specified are all conventional products that are commercially available.

**Example 1**

1. Preparation of positive electrode plate:

a positive electrode active material of lithium iron phosphate, a binder of polyvinylidene fluoride (PVDF), a conductive agent of acetylene black were dissolved into a solvent of N-methylpyrrolidone (NMP) at a mass ratio of 0.9 : 0.05 : 0.05, and fully stirred and uniformly mixed to prepare a positive electrode slurry; the positive electrode slurry was uniformly coated onto a positive electrode current collector of aluminum foil, followed by drying, cold pressing and slitting to obtain a positive electrode plate.

2. Preparation of negative electrode plate:

a negative electrode active material of artificial graphite, a conductive agent of acetylene black, a binder of styrene butadiene rubber (SBR) and a thickener of sodium carboxymethyl cellulose (CMC-Na) were dissolved in deionized water at a mass ratio of 90% : 5% : 4% : 1%, and fully stirred and uniformly mixed to prepare a negative electrode slurry; the negative electrode slurry was coated onto a negative electrode current collector of copper foil, followed by drying, cold pressing and slitting to obtain a negative electrode plate.

3. Preparation of separator:

elemental silicon particles with a particle size $D_v50$ of 1 $\mu$m, polyvinylidene fluoride (PVDF, weight-average molecular weight of 500,000) and a dispersant of polyvinyl alcohol were mixed in N-methylpyrrolidone at a mass ratio of 0.985 : 0.01 : 0.005 to obtain a mixed slurry with a solid mass content of 50%; the mixed slurry was scrape coated on the surface of a first substrate layer (PP material, with an average pore size of 50 nm) with a thickness of 7 $\mu$m to obtain a mixed material layer provided on the first substrate layer, and the surface of the mixed material layer away from the first substrate layer was compounded with a second substrate layer (PP material, with an average pore size of 50 nm) with a thickness of 7 $\mu$m by a pressing roller while the mixed slurry was not dry, followed by drying to obtain a separator; wherein the thickness of the mixed material layer was 3 $\mu$m.

4. Preparation of electrolyte solution:

ethylene carbonate (EC), ethyl methyl carbonate (EMC) and diethyl carbonate (DEC) were mixed at a volume ratio of 1 : 1 : 1, and $LiPF_6$ was then uniformly dissolved in the above solution to obtain an electrolyte solution. In the electrolyte solution, the concentration of $LiPF_6$ was 1 mol/L.

5. Preparation of secondary battery:

The above positive electrode plate, the separator and the negative electrode plate were stacked in sequence and wound to obtain an electrode assembly; the electrode assembly was placed into an outer package, the electrolyte solution prepared above was added, followed by the procedures such as packaging, standing, formation, aging to obtain a secondary battery.

6. Preparation of button battery:

A $\Phi$18 mm lithium plate with a thickness of 500 $\mu$m was used as a positive electrode and a negative electrode, wherein an interlayer between the positive electrode and the negative electrode was the above separator, and the electrolyte solution was dropwise added to assemble a 2430 type button battery. The electrolyte solution was EC/DMC containing 1 mol/L $LiPF_6$ (a volume ratio of EC to DMC was 1 : 1).

**Examples 2 - 34 and Comparative examples 1 - 5 were similar to Example 1, and the different parameters were shown in Table 1 in details.**

Table 1: Parameters of Examples 1 - 34 and Comparative examples 1 - 5

| | Mixed material layer | | | | | | | | First substrate layer | | | Second substrate layer | | | Protective layer and thickness thereof | Electronic conductivity of separator (mS/cm2) | Ratio of Dv50 of inorganic material to average pore size of substrate | Thickness of separator (μm) |
| | Inorganic material | | | Dispersant | | Polymer | | Thickness (μm) | TYpe | Average pore size (nm) | Thickness (μm) | TYpe | Average pore size (nm) | Thickness (μm) | | | | |
| | Type | $D_v50$ (μm) | Mass content | Type | Mass content | Type | Mass content | | | | | | | | | | | |
| Example 1 | Si | 1 | 98.5 0% | Polyvinyl alcohol | 0.5 0% | PVDF | 1% | 3 | P P | 50 | 7 | P P | 50 | 7 | - | 4.35E-05 | 20 | 17 |
| Example 2 | SiO | 1 | 98.5 0% | Polyvinyl alcohol | 0.5 0% | PVDF | 1% | 3 | P P | 50 | 7 | P P | 50 | 7 | - | 2.50E-10 | 20 | 17 |
| Example 3 | $SiO_2$ | 0.4 | 98.5 0% | Polyvinyl alcohol | 0.5 0% | PVDF | 1% | 3 | P P | 50 | 7 | P P | 50 | 7 | - | 2.10E-11 | 8 | 17 |
| Example 4 | ZnO | 0.2 | 98.5 0% | Polyvinyl alcohol | 0.5 0% | PVDF | 1% | 3 | P P | 50 | 7 | P P | 50 | 7 | - | 4.80E-07 | 4 | 17 |
| Example 5 | $SnO_2$ | 0.2 | 98.5 0% | Polyvinyl alcohol | 0.5 0% | PVDF | 1% | 3 | P P | 50 | 7 | P P | 50 | 7 | - | 4.30E-05 | 4 | 17 |
| Example 6 | CuO | 0.2 | 98.5 0% | Polyvinyl alcohol | 0.5 0% | PVDF | 1% | 3 | P | 50 | 7 | P P | 50 | 7 | - | 7.80E-04 | 4 | 17 |
| Example 7 | $FePO_4$ | 1 | 98.5 0% | Polyvinyl alcohol | 0.5 0% | PVDF | 1% | 3 | P P | 50 | 7 | P P | 50 | 7 | - | 5.20E-08 | 20 | 17 |
| Example 8 | $Fe_2O_3$ | 0.7 | 98.5 0% | Polyvinyl alcohol | 0.5 0% | PVDF | 1% | 3 | P P | 50 | 7 | P P | 50 | 7 | - | 1.1OE-09 | 14 | 17 |

EP 4 528 905 A1

| | Mixed material layer | | | | | | | | First substrate layer | | | Second substrate layer | | | Protective layer and thickness thereof | Electronic conductivity of separator (mS/cm2) | Ratio of Dv50 of inorganic material to average pore size of substrate | Thickness of separator (μm) |
|---|---|---|---|---|---|---|---|---|---|---|---|---|---|---|---|---|---|---|
| | Inorganic material | | | Dispersant | | Polymer | | Thickness (μm) | Type | Average pore size (nm) | Thickness (μm) | Type | Average pore size (nm) | Thickness (μm) | | | | |
| | Type | $D_v50$ (μm) | Mass content | Type | Mass content | Type | Mass content | | | | | | | | | | | |
| Example 9 | Si | 1 | 98.50% | Polyvinyl alcohol | 0.50% | PVDF | 1% | 3 | PE | 50 | 7 | PE | 50 | 7 | - | 3.90E-06 | 20 | 17 |
| Example 10 | SiO | 1 | 98.50% | Polyvinyl alcohol | 0.50% | PVDF | 1% | 3 | PE | 37 | 7 | PE | 37 | 7 | - | 2.50E-11 | 27 | 17 |
| Example 11 | $SiO_2$ | 0.4 | 98.50% | Polyvinyl alcohol | 0.50% | PVDF | 1% | 3 | PE | 37 | 7 | PE | 37 | 7 | - | 3.50E-10 | 11 | 17 |
| Example 12 | ZnO | 0.2 | 98.50% | Polyvinyl alcohol | 0.50% | PVDF | 1% | 3 | PE | 37 | 7 | PE | 37 | 7 | - | 5.60E-08 | 5 | 17 |
| Example 13 | $SnO_2$ | 0.2 | 98.50% | Polyvinyl alcohol | 0.50% | PVDF | 1% | 3 | PE | 37 | 7 | PE | 37 | 7 | - | 7.80E-06 | 5 | 17 |
| Example 14 | CuO | 0.2 | 98.50% | Polyvinyl alcohol | 0.50% | PVDF | 1% | 3 | PE | 37 | 7 | PE | 37 | 7 | - | 9.30E-05 | 5 | 17 |
| Example 15 | $FePO_4$ | 1 | 98.50% | Polyvinyl alcohol | 0.50% | PVDF | 1% | 3 | PE | 37 | 7 | PE | 37 | 7 | - | 5.20E-09 | 27 | 17 |
| Example 16 | $Fe_2O_3$ | 0.7 | 98.50% | Polyvinyl alcohol | 0.50% | PVDF | 1% | 3 | PE | 37 | 7 | PE | 37 | 7 | - | 3.10E-10 | 19 | 17 |

EP 4 528 905 A1

14

| | Mixed material layer | | | | | | | | First substrate layer | | | Second substrate layer | | | Protective layer and thickness thereof | Electronic conductivity of separator (mS/cm2) | Ratio of Dv50 of inorganic material to average pore size of substrate | Thickness of separator (μm) |
|---|---|---|---|---|---|---|---|---|---|---|---|---|---|---|---|---|---|---|
| | Inorganic material | | | Dispersant | | Polymer | | | | | | | | | | | | |
| | Type | $D_v50$ (μm) | Mass content | Type | Mass content | Type | Mass content | Thickness (μm) | TYPE | Average pore size (nm) | Thickness (μm) | TYPE | Average pore size (nm) | Thickness (μm) | | | | |
| Example 17 | $BaTiO_3$ | 0.45 | 98.50% | Polyvinyl alcohol | 0.50% | PVDF | 1% | 3 | PE | 37 | 7 | PE | 37 | 7 | - | 3.60E-08 | 12 | 17 |
| Example 18 | CoO | 0.6 | 98.50% | Polyvinyl alcohol | 0.50% | PVDF | 1% | 3 | PE | 37 | 7 | PE | 37 | 7 | - | 7.10E-10 | 16 | 17 |
| Example 19 | $Mn_2O_3$ | 0.55 | 98.50% | Polyvinyl alcohol | 0.50% | PVDF | 1% | 3 | PE | 37 | 7 | PE | 37 | 7 | - | 3.30E-05 | 15 | 17 |
| Example 20 | $Cu_3N$ | 0.4 | 98.50% | Polyvinyl alcohol | 0.50% | PVDF | 1% | 3 | PE | 37 | 7 | PE | 37 | 7 | - | 4.70E-06 | 11 | 17 |
| Example 21 | $CF_2$ | 0.45 | 98.50% | Polyvinyl alcohol | 0.50% | PVDF | 1% | 3 | PE | 37 | 7 | PE | 37 | 7 | - | 5.10E-05 | 12 | 17 |
| Example 22 | $SiO_2$ | 0.045 | 98.50% | Polyvinyl alcohol | 0.50% | PVDF | 1% | 3 | PE | 37 | 7 | PE | 37 | 7 | - | 3.5E-10 | 1 | 17 |
| Example 23 | $SiO_2$ | 9 | 98.50% | Polyvinyl alcohol | 0.50% | PVDF | 1% | 10 | PE | 37 | 7 | PE | 37 | 7 | - | 3.5E-10 | 243 | 24 |
| Example 24 | $SiO_2$ | 0.4 | 98.50% | Polyvinyl alcohol | 0.50% | PVDF | 1% | 0.5 | PE | 37 | 7 | PE | 37 | 7 | - | 3.5E-10 | 11 | 14.5 |

EP 4 528 905 A1

(continued)

| | Mixed material layer | | | | | | | | First substrate layer | | | Second substrate layer | | | Protective layer and thickness thereof | Electronic conductivity of separator (mS/cm2) | Ratio of Dv50 of inorganic material to average pore size of substrate | Thickness of separator (μm) |
| | Inorganic material | | | Dispersant | | Polymer | | Thickness (μm) | | | | | | | | | | |
| | Type | Dv50 (μm) | Mass content | Type | Mass content | Type | Mass content | | Type | Average pore size (nm) | Thickness (μm) | Type | Average pore size (nm) | Thickness (μm) | | | | |
|---|---|---|---|---|---|---|---|---|---|---|---|---|---|---|---|---|---|---|
| Example 25 | SiO$_2$ | 0.4 | 98.50% | Polyvinyl alcohol | 0.50% | PVDF | 1% | 3 | PE | 37 | 4 | PE | 37 | 4 | - | 3.5E-10 | 11 | 11 |
| Example 26 | LATP | 0.4 | 98.50% | Polyvinyl alcohol | 0.50% | PVDF | 1% | 3 | PE | 37 | 4 | PE | 37 | 4 | - | 4.7E-10 | 11 | 11 |
| Example 27 | FePO$_4$ | 0.4 | 75% | Polyvinyl alcohol | 15% | PVDF | 10% | 3 | PE | 37 | 7 | PE | 37 | 7 | - | 1.20E-09 | 11 | 17 |
| Example 28 | FePO$_4$ | 0.4 | 99.7% | Polyvinyl alcohol | 0.1% | PVDF | 0.2% | 3 | PE | 37 | 7 | PE | 37 | 7 | - | 6.70E-09 | 11 | 17 |
| Example 29 | FePO$_4$ | 0.4 | 98.5% | Polyvinyl alcohol | 0.1% | PVDF | 1.4% | 3 | PE | 37 | 7 | PE | 37 | 7 | - | 4.80E-09 | 11 | 17 |
| Example 30 | FePO$_4$ | 0.4 | 94.0% | Polyvinyl alcohol | 5.0% | PVDF | 1.0% | 3 | PE | 37 | 7 | PE | 37 | 7 | - | 3.20E-09 | 11 | 17 |
| Example 31 | FePO$_4$ | 0.4 | 98.0% | Polyvinyl alcohol | 1.0% | PVDF | 1.0% | 3 | PE | 37 | 7 | PE | 37 | 7 | - | 5.10E-09 | 11 | 17 |
| Example 32 | FePO$_4$ | 0.4 | 76.0% | Polyvinyl alcohol | 4.0% | PVDF | 20.0% | 3 | PE | 37 | 7 | PE | 37 | 7 | - | 1.1OE-09 | 11 | 17 |

(continued)

| | Mixed material layer | | | | | | | | First substrate layer | | | Second substrate layer | | | Protective layer and thickness thereof | Electronic conductivity of separator (mS/cm2) | Ratio of Dv50 of inorganic material to average pore size of substrate | Thickness of separator (μm) |
| | Inorganic material | | | Dispersant | | Polymer | | Thickness (μm) | TYpe | Average pore size (nm) | Thickness (μm) | TYpe | Average pore size (nm) | Thickness (μm) | | | | |
| | Type | $D_v50$ (μm) | Mass content | Type | Mass content | Type | Mass content | | | | | | | | | | | |
|---|---|---|---|---|---|---|---|---|---|---|---|---|---|---|---|---|---|---|
| Example 33 | FePO4 | 0.4 | 98.50% | Polyvinyl alcohol | 0.50% | PVDF | 1% | 3 | PE | 37 | 7 | PE | 37 | 7 | Aluminum oxide (2 μm) | 4.90E-09 | 11 | 19 |
| Example 34 | FePO4 | 0.4 | 49.00% | Polyvinyl alcohol | 0.5% | PVDF | 1% | 3 | PE | 37 | 7 | PE | 37 | 7 | - | 2.10E-10 | 10.81081081 | 17 |
| | SiO | 0.4 | 49.50% | | | | | | | | | | | | | | | |
| Comparative example 1 | - | - | - | - | - | - | - | - | PE | 37 | 17 | - | - | - | - | 1.6E-09 | - | 17 |
| Comparative example 2 | - | - | - | - | - | - | - | - | PP | 50 | 17 | - | - | - | - | 1.0E-08 | - | 17 |
| Comparative example 3 | γ-AlO(OH) | 0.4 | 98.50% | Polyvinyl alcohol | 0.50% | PVDF | 1% | 3 | PE | 37 | 7 | PE | 37 | 7 | | 2.30E-14 | 11 | 17 |
| Comparative example 4 | Fe2O3 | 0.7 | 98.50% | Polyvinyl alcohol | 0.50% | PVDF | 1% | 3 | PE | 37 | 7 | PE | 37 | 7 | - | 5.00E-01 | 19 | 17 |
| Comparative example 5 | CuO | 0.2 | 98.50% | Polyvinyl alcohol | 0.50% | PVDF | 1% | 3 | PE | 37 | 7 | PE | 37 | 7 | - | 3.00E-01 | 5 | 17 |

**Material and battery performance test**

(1) Test of electronic conductivity of separator:

Test method: a lithium iron phosphate electrode plate (the area density was 0.025 g/cm$^2$ and the thickness of the aluminum foil was 60 $\mu$m) was used as the positive electrode, and a graphite electrode plate (the area density was 0.012 g/cm$^2$ and the thickness of the copper foil was 8 $\mu$m) was used as the negative electrode, and the interlayer was the separator to be tested. The impedance was tested by using a hot-pressing resistance meter under a voltage of 200 V and a pressure of 600 kgf, and the resistance value of the separator was tested; the electronic conductivity $\sigma$ of the separator was calculated according to the following formula;

$$R = S / \ (\sigma \times \ell)$$

in which, R was the resistance value of the separator; S was the test area of the separator, that is, the area of a circle with a diameter of $\Phi$14 mm; $\ell$ = H $\times$ (1 - porosity), $\ell$ was the corresponding thickness of the separator after the pores were eliminated under the pressure of 600 kgf, and H was the initial thickness of the separator.
The test method of the above porosity was as follows:
the thickness of the separator was measured with a ten-thousandth micrometer, the length and width of the separator were measured with a ruler and the area of the separator was calculated, and then the apparent volume V of the separator was calculated; the weight M of the separator was measured with a balance with a precision of ten thousand, $\rho$ indicates the theoretical density of the substrate, and the porosity P of the separator was calculated according to the following formula.

$$P = \left( 1 - \frac{M}{V \times \rho} \right) \times 100\%$$

(2) Test of particle size D$_v$50:

Test method: a certain amount of deionized water was added to a sample, and the sample was ultrasonicated by an ultrasonic device for 10 min. After the sample was completely dispersed, the particle size Dv50 of the sample was tested by a laser particle analyzer.

(3) Test of thickness:

Test method: after the sample was spread out, the thicknesses of more than ten different positions were measured with the ten-thousandth micrometer and averaged to obtain the thickness of the sample.

(4) Test of average pore size:

Test method: on the basis of a mercury intrusion method, a certain amount of the sample was placed into a mercury intrusion meter to test its average pore diameter.

(5) Electrolyte solution absorption experiment of separator:

Experimental method: the separator was baked at 100°C for more than 6 hours to ensure that the sample was fully dry, the dried separator was cut into a sample with a same size and its thickness (d) was measured; the sample was fixed on a sample table, a capillary with a flat port was used to suck the electrolyte solution (the density was $\rho$) with a specified height h, then a microscope was opened, and the lens magnification was adjusted until the capillary and the sample could be clearly seen. The capillary port was brought into contact with the sample, and a stopwatch was used for timing while the capillary liquid level dropped. When the liquid level dropped to the end, the liquid suction time t was read and the data was recorded. The average liquid suction rate v of the separator was calculated according to the following formula.

$$v = \pi \times \left( d/2 \right)^2 \times h \times \rho / t$$

(6) Thermal shrinkage experiment of separator:

Experimental method: the separator was spread out and cut into a sample with a size of 100 mm × 100 mm, the oven was set at 120°C and kept at this temperature for 1 h, then the sample was placed therein and kept at this temperature for 4 h, then the sample was taken out, cooled and tested for its size, the thermal shrinkage ratio in two directions was calculated, respectively, and then average value in the two direction was used.

(7) Test of short circuit time:

the button battery was subjected to charge and discharge test by a Xinwei charge and discharge tester: first, the button battery was left to stand for 10 min, charged at a current density of 4 mA/cm$^2$ for 1 h, and then left to stand for 10 min and discharged at a current density of 4 mA/cm$^2$ for 1 h, and the above operations were continuously repeated for multiple cycles. The maximum voltage minus the minimum voltage in the first charge and discharge process was used as the normal voltage distribution, when the voltage distribution in the subsequent charge and discharge cycles (the maximum voltage minus the minimum voltage in the same cycle) was < 0.3 times the normal voltage distribution, the separator was judged in a short-circuit state, and the cycle was stopped and the running time at this time was recorded as the short-circuit time.

The above results were shown in Table 2.

Table 2: Performance test results of Examples 1 - 34 and Comparative examples 1 - 5

|  | | Results of electrolyte solution absorption experiment (μg/s) | Results of secondary battery thermal shrinkage experiment | Short circuit time (h) |
|---|---|---|---|---|
| | Example 1 | 8.1 | 5.3% | 176 |
| | Example 2 | 9.3 | 5.6% | 165 |
| | Example 3 | 8.7 | 5.4% | 143 |
| | Example 4 | 6.3 | 5.3% | 153 |
| | Example 5 | 6.7 | 5.7% | 163 |
| | Example 6 | 6.4 | 5.6% | 147 |
| | Example 7 | 7.2 | 5.2% | 143 |
| | Example 8 | 7.8 | 6.5% | 144 |
| | Example 9 | 8.8 | 6.8% | 179 |
| | Example 10 | 10 | 6.6% | 171 |
| | Example 11 | 9.4 | 6.5% | 147 |
| | Example 12 | 7 | 6.9% | 152 |
| | Example 13 | 7.4 | 6.8% | 172 |
| | Example 14 | 7.1 | 6.4% | 152 |
| | Example 15 | 7.9 | 7.7% | 151 |
| | Example 16 | 8.5 | 8.0% | 153 |
| | Example 17 | 8.8 | 6.5% | 165 |
| | Example 18 | 7.8 | 6.7% | 153 |
| | Example 19 | 7.2 | 6.9% | 145 |
| | Example 20 | 6.9 | 6.9% | 151 |
| | Example 21 | 7.5 | 6.3% | 142 |
| | Example 22 | 10.3 | 6.8% | 176 |
| | Example 23 | 8.7 | 10.3% | 121 |
| | Example 24 | 9.2 | 12.4% | 121 |
| | Example 25 | 6.2 | 13.1% | 119 |

(continued)

|  | Results of electrolyte solution absorption experiment ($\mu$g/s) | Results of secondary battery thermal shrinkage experiment | Short circuit time (h) |
|---|---|---|---|
| Example 26 | 7.8 | 6.1% | 163 |
| Example 27 | 10.3 | 5.8% | 135 |
| Example 28 | 9.7 | 6.8% | 151 |
| Example 29 | 9.6 | 6.1% | 145 |
| Example 30 | 9.6 | 6.3% | 144 |
| Example 31 | 9.8 | 8.0% | 153 |
| Example 32 | 9.8 | 5.5% | 140 |
| Example 33 | 10.5 | 4.9% | 165 |
| Example 34 | 8 | 5.30% | 155 |
| Comparative example 1 | 4.3 | 22.0% | 100 |
| Comparative example 2 | 4.6 | 25.0% | 110 |
| Comparative example 3 | 6.7 | 5.7% | 98 |
| Comparative example 4 | 8.5 | 8.0% | 88 |
| Comparative example 5 | 7.1 | 6.5% | 80 |

According to the above results, it can be seen that: compared with Comparative examples 1 - 5, the separator of the present application delayed the occurrence time of lithium dendrites puncturing the separator and the occurrence of internal short circuit in the secondary battery, and prolongs the service life of the battery; compared with Comparative examples 1 - 3, in the present application, the infiltration of the separator film to the electrolyte solution, the transport rate of lithium ions, and the charge and discharge rate of the battery were increased, the thermal shrinkage performance of the separator was better, and the safety of the secondary battery was improved.

It should be noted that the present application is not limited to the above embodiments. The above implementations are only examples, and all implementations within the scope of the technical solution of the present application that have substantially the same composition and have the same effect as the technical concept are encompassed in the technical scope of the present application. In addition, without departing from the scope of the subject matter of the present application, various modifications that may be conceived by those skilled in the art to the implementations, and other modes constructed by combining some of the constituent elements of the implementations are also encompassed in the scope of the present application.

**Claims**

1. A separator comprising a first substrate layer, a mixed material layer and a second substrate layer; the mixed material layer is provided between the first substrate layer and the second substrate layer; the mixed material layer comprises an inorganic material and a dispersant; wherein,
the electronic conductivity $\sigma$ of the separator satisfies: $1 \times 10^{-13}$ mS/cm $< \sigma < 1 \times 10^{-1}$ mS/cm.

2. The separator according to claim 1, wherein the inorganic material is selected from one or more of (1) - (3) below:

   (1) elemental silicon;
   (2) oxides, nitrides and fluorides of one or more elements selected from silicon, aluminum, iron, titanium, cobalt, nickel, manganese, tin, zinc, barium and copper; and
   (3) phosphates of one or more elements selected from aluminum, iron, titanium, cobalt, nickel, manganese, tin, zinc, barium and copper.

3. The separator according to claim 1 or 2, wherein the inorganic material is selected from one or more of silicon dioxide, silicon monoxide, silicon, zinc oxide, tin oxide, copper oxide, iron phosphate, barium titanate, cobalt oxide, manganese oxide, iron oxide, copper nitride and lithium titanium aluminum phosphate.

4. The separator according to any one of claims 1 to 3, wherein the mass content of the inorganic material is 75% - 99.7%, and the mass content of the dispersant is 0.1% - 15%, optionally 0.1% - 5%, based on the total mass of the mixed material layer.

5. The separator according to any one of claims 1 to 4, wherein the ratio of the particle size $D_v50$ of the inorganic material to the average pore size of the first substrate layer is 1 : 1 - 243 : 1; and/or,
the ratio of the particle size $D_v50$ of the inorganic material to the average pore size of the second substrate layer is 1 : 1 - 243 : 1.

6. The separator according to any one of claims 1 to 5, the dispersant is selected from one or more of sodium polyacrylate, ammonium polyacrylate, sodium hexafluorophosphate, sodium carboxymethyl cellulose, hydrolyzed polymaleic anhydride, an acrylic block polymer, a polyester block polymer, a polyethylene glycol polyol, polyvinyl alcohol and a polyethyleneimine derivative.

7. The separator according to any one of claims 1 to 6, wherein the thickness of the mixed material layer is 0.5 - 10 $\mu$m; optionally, the thickness of the separator is 11 - 24 $\mu$m.

8. The separator according to any one of claims 1 to 7, wherein the mixed material layer further comprises a polymer selected from one or more of a styrene-butadiene rubber, a water-based acrylic resin, polyvinylidene fluoride, polytetrafluoroethylene, an ethylene-vinyl acetate copolymer, polyacrylic acid, carboxymethyl cellulose, polyvinyl alcohol, and polyvinyl butyral;
optionally, the mass content of the polymer is 0.1% - 20%, based on the total mass of the mixed material layer.

9. The separator according to any one of claims 1 to 8, wherein a protective layer is further provided on the surface of the first substrate layer away from the mixed material layer and/or on the surface of the second substrate layer away from the mixed material layer; optionally, the protective layer contains one or two selected from alumina and boehmite.

10. A method for preparing a separator, comprising the steps of:

coating a slurry comprising an inorganic material, a dispersant and optionally a polymer on a first substrate layer to obtain a first substrate layer provided with a mixed material layer; and
compounding a second substrate layer on the surface of the mixed material layer far away from the first substrate layer to obtain a separator;
wherein the separator comprises the first substrate layer, the mixed material layer and the second substrate layer; the mixed material layer is provided between the first substrate layer and the second substrate layer; the mixed material layer comprises the inorganic material, the dispersant and optionally the polymer; the electronic conductivity $\sigma$ of the separator satisfies: $1 \times 10^{-13}$ mS/cm $< \sigma < 1 \times 10^{-1}$ mS/cm;
wherein the inorganic material and the dispersant are described as in any one of claims 1 to 9, and the polymer is described as in claim 8.

11. A secondary battery, comprising a separator according to any one of claims 1 to 9, or a separator prepared by a method according to claim 10.

12. The secondary battery according to claim 11, wherein

a positive electrode active material comprises one or more selected from lithium iron phosphate, a nickel cobalt manganese ternary material, lithium manganate, lithium cobaltate and lithium nickelate; and/or,
a negative electrode active material comprises one or more selected from graphite, a silicon carbon compound, a silicon oxide compound and lithium metal.

13. A power consuming device comprising a secondary battery according to claim 11 or 12.

**5**

**FIG. 1**

**5**

53

52

52

51

**FIG. 2**

**4**      **5**      **5**

**5**

**FIG. 3**

FIG. 4

FIG. 5

FIG. 6

## INTERNATIONAL SEARCH REPORT

| | International application No. |
|---|---|
| | **PCT/CN2022/122476** |

**A. CLASSIFICATION OF SUBJECT MATTER**

H01M50/431(2021.01)i; H01M50/446(2021.01)i; H01M50/451(2021.01)i

According to International Patent Classification (IPC) or to both national classification and IPC

**B. FIELDS SEARCHED**

Minimum documentation searched (classification system followed by classification symbols)

IPC:H01M

Documentation searched other than minimum documentation to the extent that such documents are included in the fields searched

Electronic data base consulted during the international search (name of data base and, where practicable, search terms used)

VEN; CNABS; CNTXT; WOTXT; EPTXT; USTXT; CNKI; IEEE: 电池, 电芯, 无机, 涂层, 隔膜, 隔离膜, 隔板, 间隔件, 分离件, 分隔件, 导电率, 电导率, 传导率, separator, membrane, diagram, inorganic, batter+, cell?, coat+, conductivity

**C. DOCUMENTS CONSIDERED TO BE RELEVANT**

| Category* | Citation of document, with indication, where appropriate, of the relevant passages | Relevant to claim No. |
|---|---|---|
| X | CN 108448160 A (NINGDE AMPEREX TECHNOLOGY LTD.) 24 August 2018 (2018-08-24) description, paragraphs 26-62, and figures 1-3 | 1-13 |
| A | CN 109980164 A (NINGDE AMPEREX TECHNOLOGY LTD.) 05 July 2019 (2019-07-05) entire document | 1-13 |
| A | CN 102064299 A (FSPG HI-TECH CO., LTD.) 18 May 2011 (2011-05-18) entire document | 1-13 |
| A | CN 114361720 A (NINGDE AMPEREX TECHNOLOGY LTD.) 15 April 2022 (2022-04-15) entire document | 1-13 |
| A | CN 110828756 A (NORTHEASTERN UNIVERSITY) 21 February 2020 (2020-02-21) entire document | 1-13 |
| A | CN 110931689 A (NORTHEASTERN UNIVERSITY) 27 March 2020 (2020-03-27) entire document | 1-13 |
| A | US 8481195 B1 (HRL LABORATORIES, L.L.C.) 09 July 2013 (2013-07-09) entire document | 1-13 |

☐ Further documents are listed in the continuation of Box C.    ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **16 May 2023** | **31 May 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

INTERNATIONAL SEARCH REPORT
Information on patent family members

| International application No. |
| --- |
| **PCT/CN2022/122476** |

| Patent document cited in search report | | | Publication date (day/month/year) | Patent family member(s) | | | Publication date (day/month/year) |
| --- | --- | --- | --- | --- | --- | --- | --- |
| CN | 108448160 | A | 24 August 2018 | None | | | |
| CN | 109980164 | A | 05 July 2019 | EP | 3712983 | A1 | 23 September 2020 |
| | | | | US | 2020303707 | A1 | 24 September 2020 |
| | | | | US | 11374286 | B2 | 28 June 2022 |
| CN | 102064299 | A | 18 May 2011 | None | | | |
| CN | 114361720 | A | 15 April 2022 | None | | | |
| CN | 110828756 | A | 21 February 2020 | None | | | |
| CN | 110931689 | A | 27 March 2020 | None | | | |
| US | 8481195 | B1 | 09 July 2013 | US | 8962173 | B1 | 24 February 2015 |
| | | | | US | 8623556 | B1 | 07 January 2014 |
| | | | | US | 9843029 | B1 | 12 December 2017 |

Form PCT/ISA/210 (patent family annex) (July 2022)